(19) **Europäisches Patentamt / European Patent Office / Office européen des brevets**

(11) **EP 1 755 299 A2**

(12) # EUROPEAN PATENT APPLICATION

(43) Date of publication:
**21.02.2007 Bulletin 2007/08**

(51) Int Cl.:
***H04L 27/26*** *(2006.01)*

(21) Application number: **06015517.3**

(22) Date of filing: **25.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **19.08.2005 KR 20050076058**

(71) Applicants:
  • **Samsung Electronics Co., Ltd.**
    **Suwon-si, Gyeonggi-Do (KR)**
  • **Industry-Academic Cooperation Foundation**
    **Seodaemun-gu**
    **Seoul (KR)**

(72) Inventors:
  • **Kwun, Jong-Hyung**
    **Seoul (KR)**

  • **Kim, Eung-Sun**
    **-dong, Paldal-gu, Suson-si, Geonggi-do (KR)**
  • **Cho, Myeon-Kyun**
    **526, Bundang-gu, Seongnam-si, Gyeonggi-d (KR)**
  • **Lee, Jong-Hyeuk**
    **Dongan-gu, Anyang-si,Gyeonggi-do (KR)**
  • **Yu, Hyun-Kyu**
    **unknown (KR)**
  • **Hong, Daesik**
    **Seoul (KR)**

(74) Representative: **Grünecker, Kinkeldey,**
    **Stockmair & Schwanhäusser**
    **Anwaltssozietät**
    **Maximilianstrasse 58**
    **80538 München (DE)**

(54) **Transmitting/receiving apparatus and method for cell search in a broadband wireless communication system using multiple carriers**

(57)     Disclosed is transmitting/receiving system and method for efficient cell search in a broadband wireless communication system using multiple carriers. The system includes a Base station (BS) generating an SCH signal by mapping predetermined symbols to predetermined subcarriers according to a code group to which the BS belongs, code-multiplexing a TCH signal and a pilot channel signal mapped to a predetermined time-frequency area and scrambling the code-multiplexed signal with a predetermined scrambling code identifying the BS along a time axis, time-multiplexing the SCH signal with the scrambled signal, OFDM-modulating the time-multiplexed signal, and transmitting the OFDM-modulated signal.

FIG.2

**Description**

**PRIORITY**

This application claims priority under 35 U.S.C. § 119 to an application entitled "Transmitting/Receiving Apparatus And Method For Cell Search In A Broadband Wireless Communication System" filed in the Korean Intellectual Property Office on August 19, 2005 and assigned Serial No. 2005-76058, the contents of which are herein incorporated by reference.

**BACKGROUND OF THE INVENTION**

1. Field of the Invention

The present invention relates generally to a transmitting/receiving apparatus and method for cell search in a broadband wireless communication system, and in particular, to a transmitting/receiving apparatus and method for efficient cell search in an Orthogonal Frequency Code Division Multiple Access (OFCDMA) wireless communication system.

2. Description of the Related Art

Upon power-on, a Mobile Station (MS) typically performs an initial cell search by acquiring Pseudo Noise (PN) code timing in a Code Division Multiple Access (CDMA) mobile communication system, for example, an IS-95 system. A Base Station (BS) transmits a PN code to all MSs within its coverage area on a forward pilot channel. The forward pilot channel is an unmodulated sequence spread with the PN code. The MSs carry out synchronization acquisition, channel estimation, and BS identification using the pilot channel.

The IS-95 system has evolved to 3rd Generation (3G) mobile communication systems which includes a system known as a Universal Mobile Telecommunication System (UMTS). Although the UMTS is based on the CDMA mobile communication system, Node Bs used by the UMTS system are asynchronous with one another.

For cell search in a conventional UMTS system, every Node B is allocated a cell identification code specific to the Node B. Assuming that 512 cells exist with each cell having a single Node B (i.e., there are 512 Node Bs), each Node B is allocated a different cell identification code, in order to search for a serving Node B, and a User Equipment (UE) must search the 512 Node Bs one-by-one. Because it takes time to check the phases of the 512 cell identification codes on a one-by-one basis, the UMTS system adopts a multi-step cell search algorithm. For instance, the 512 Node Bs are divided into a predetermined number of groups, for example, 64 groups. Each group is allocated a different group code, for group identification and 8 Node Bs in each group are distinguished by different spreading codes (or scrambling codes) used for their common pilot channels (CPICHs). Thus, the UE first acquires a Node B group and then correlates a received CPICH with the scrambling codes of the Node Bs within the Node B group, thereby identifying a serving Node B.

The 3G mobile communication systems are now involving into 4th Generation (4G) mobile communication systems. A standardization organization recommends Orthogonal Frequency Division Multiplexing (OFDM) for 4G mobile communications. OFDM is a special case of Multi-Carrier Modulation (MCM) in which a serial symbol sequence is converted to parallel symbol sequences and modulated to mutually orthogonal subcarriers, prior to transmission.

Although hardware complexity is an obstacle to the widespread use of OFDM, recent advances in digital signal processing technology including Fast Fourier Transform (FFT) and Inverse Fast Fourier Transform (IFFT) have enabled OFDM implementation.

Multi-Carrier-Code Division Multiple Access (MC-CDMA) based on UMTS or Wideband CDMA (WCDMA) is an OFDM communication system. Conventionally, a cell search is carried out in the MC-CDMA communication system.

Typically, in the MC-CDMA communication system the cell search is based on a CPICH on a CPICH method. Since the CPICH are time-multiplexed prior to transmission, no interference occurs to other Traffic Channels (TCHs).

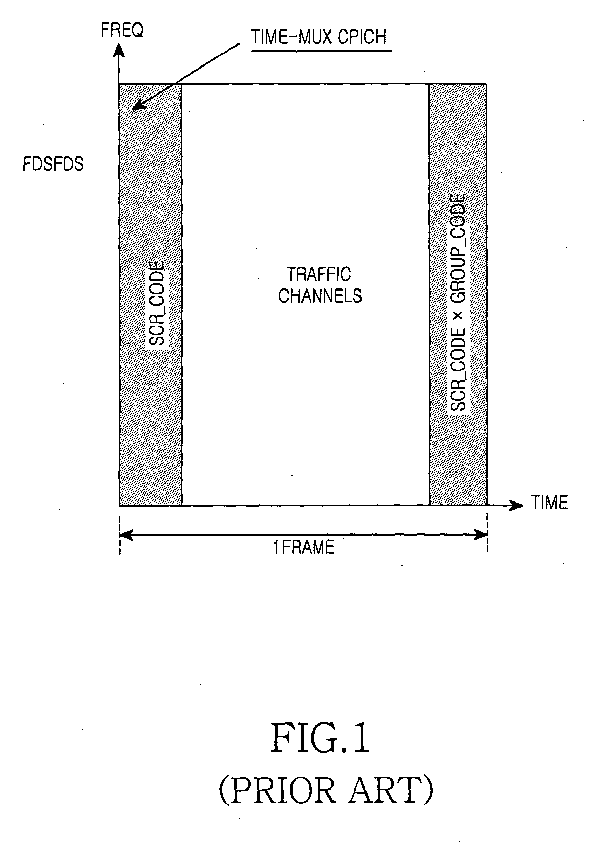

As illustrated in FIG. 1, the CPICH cell search method is time-multiplexed for transmission, that is, a scrambling code is spread along the frequency axis. Thus, performance degradation is caused by frequency selective fading. Without accurate detection of the scrambling code (i.e., a cell identification code), cell acquisition is impossible.

Since cell search is the process of searching for a BS to communicate with, the cell search is very significant to any mobile communication system. The channel environment of wireless communications is non-ideal because of a fading-incurred power change of a received signal, shadowing, Doppler effect caused by the movement of an MS and/or a frequent change in mobile velocity, and/or interference from other users and multipath signals as well as Additive White Gaussian Noise (AWGN). Accordingly, there exists a need for a technique for increasing cell search performance under this channel environment.

While many cell search algorithms have been proposed for the 1G, 2G, and 3G mobile communication systems, a method of effectively increasing cell search performance is yet to be developed for the OFDM communication system. Accordingly, there is a need for an efficient cell search technique for the OFDM communication system.

## SUMMARY OF THE INVENTION

An object of the present invention is to substantially solve at least the above problems and/or disadvantages and to provide at least the advantages below. Accordingly, an object of the present invention is to provide a transmitting/receiving apparatus and method for performing an efficient cell search in a broadband wireless communication system.

Another object of the present invention is to provide a frame structure for enabling an efficient cell search in a broadband wireless communication system.

A further object of the present invention is to provide an apparatus and method for identifying a code group according to the positions of subcarriers to which SCH (Synchronization CHannel) symbols are mapped in a broadband wireless communication system.

Still another object of the present invention is to provide a transmitting apparatus for scrambling a pilot channel signal mapped to a predetermined time-frequency area sequentially along a time axis first and then a frequency axis in a broadband wireless communication system.

Yet another object of the present invention is to provide an apparatus and method for increasing cell search performance in a broadband wireless communication system.

Yet further object of the present invention is to provide an apparatus and method for reducing cell search complexity in a broadband wireless communication system.

The above objects are achieved by providing a transmitting/receiving apparatus and method for efficient cell search in a broadband wireless communication system using multiple carriers.

According to one aspect of the present invention, in a transmitting apparatus in a broadband wireless communication system, an SCH generator generates an SCH signal by mapping predetermined symbols to predetermined subcarriers according to a code group to which the transmitting apparatus belongs. A TCH (Traffic CHannel) generator generates a TCH signal. A selector selects the SCH signal during a preamble period and selects the TCH signal during a TCH period. A transmitter OFDM (Othogonal Frequency Division Multiplexing)-modulates a signal received from the selector and transmits the OFDM-modulated signal to a receiving apparatus.

According to another aspect of the present invention, in a transmitting apparatus in a broadband wireless communication system, a pilot channel generator generates a pilot channel signal mapped to a predetermined time-frequency area. A scrambler scrambles the pilot channel signal with a predetermined scrambling code identifying the transmitting apparatus along a time axis first. A transmitter OFDM-modulates the scrambled signal and transmits the OFDM-modulated signal.

According to a further aspect of the present invention, in a transmitting apparatus in a broadband wireless communication system, an SCH generator generates an SCH signal by mapping predetermined symbols to predetermined subcarriers according to a code group to which the transmitting apparatus belongs. A TCH generator generates a TCH signal mapped to a predetermined time-frequency area. A pilot channel generator generates a pilot channel signal. An adder adds the TCH signal and the pilot channel signal. A scrambler scrambles a signal received from the adder with a predetermined scrambling code along a time axis first. A selector selects the SCH signal during a preamble period and selects the scrambled signal during a TCH period. A transmitter OFDM-modulates a signal received from the selector and transmits the OFDM-modulated signal.

According to still another aspect of the present invention, in a receiving apparatus in a broadband wireless communication system, a symbol synchronization acquirer acquires OFDM symbol synchronization using a CP (Cyclic prefix). A code group acquirer acquires frame synchronization using two successive same OFDM symbols forming an SCH, after the OFDM symbol synchronization acquisition, and detects a code group to which a BS belongs by detecting the positions of subcarriers to which predetermined modulation symbols are mapped on the SCH. A cell detector acquires a scrambling code identifying the BS by descrambling a pilot channel signal mapped to a predetermined time-frequency area with a predetermined scrambling code for BS identification, determined by the detected code group along a time axis first, after the code group detection.

According to yet another aspect of the present invention, in a transmitting method for a BS in a broadband wireless communication system, an SCH signal is generated by mapping predetermined symbols to predetermined subcarriers according to a code group to which the BS belongs. A TCH signal is code-multiplexed with a pilot channel signal. Here, the TCH signal and pilot channel signal are mapped to a predetermined time-frequency area. The code-multiplexed signal is scrambled with a predetermined scrambling code identifying the BS along a time axis first. The SCH signal is time-multiplexed with the scrambled signal, OFDM-modulated, and transmitted.

According to yet further aspect of the present invention, in a cell search method for a receiver in a broadband wireless communication system, OFDM symbol synchronization is acquired using a CP. Frame synchronization is acquired using two successive same OFDM symbols forming an SCH, after the OFDM symbol synchronization acquisition, and a code group to which a BS belongs is detected by detecting the positions of subcarriers to which predetermined modulation symbols are mapped on the SCH. A scrambling code identifying the BS is acquired by descrambling a pilot channel signal mapped to a predetermined time-frequency area with a predetermined scrambling code for base station identification, determined by the detected code group along a time axis first, after the code group detection.

## BRIEF DESCRIPTION OF THE DRAWINGS

The above and other objects, features and advantages of the present invention will become more apparent from the following detailed description when taken in conjunction with the accompanying drawings in which:

FIG. 1 is a graph illustrating a frame structure in a conventional MC-CDMA communication system;
FIG 2 is a graph illustrating a frame structure in an OFCDMA communication system according to the present invention;
FIG 3 is a graph illustrating SCH mapping according to an embodiment of the present invention;
FIG. 4 is a graph illustrating scrambling according to the present invention;
FIG. 5 is a block diagram illustrating a transmitter in the OFCDMA communication system according to the present invention;
FIG. 6 is a block diagram illustrating a receiver in the OFCDMA communication system according to the present invention;
FIG. 7 is a detailed block diagram illustrating a symbol synchronization acquirer according to the present invention;
FIG. 8 is a detailed block diagram illustrating a code group acquirer according to the present invention;
FIG. 9 is a detailed block diagram illustrating a cell identifier according to the present invention;
FIG. 10 is a flowchart illustrating a transmission operation in a BS in the OFCDMA communication system according to the present invention;
FIG 11 is a flowchart illustrating a cell search operation in an MS in the OFCDMA communication system according to the present invention;
FIG. 12 is a graph illustrating a comparison between a conventional cell search and a cell search of the present invention in terms of the performance of a 2nd search step; and
FIG 13 are graphs illustrating a comparison between the conventional cell search and the cell search of the present invention in terms of the performance of a 3rd search step.

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention provides a technique for increasing cell search performance in an OFDM communication system having Code Division Multiplexing (CDM) features (referred to as an OFCDMA communication system). Cell search of the present invention is based on a 3-step cell search proposed for UMTS (WCDMA) and offers excellent performance in the second and third search steps.

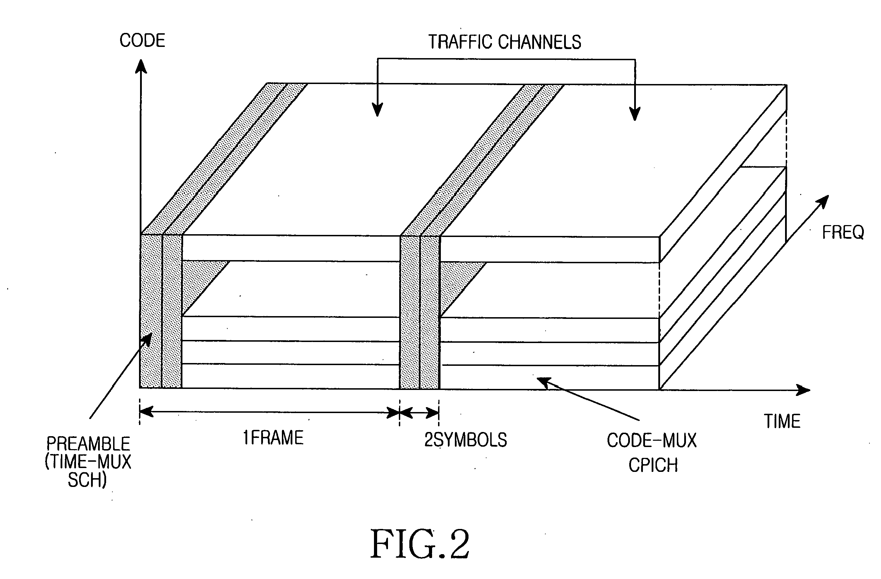

FIG. 2 is a graph illustrating a frame structure in an OFCDMA communication system according to the present invention.

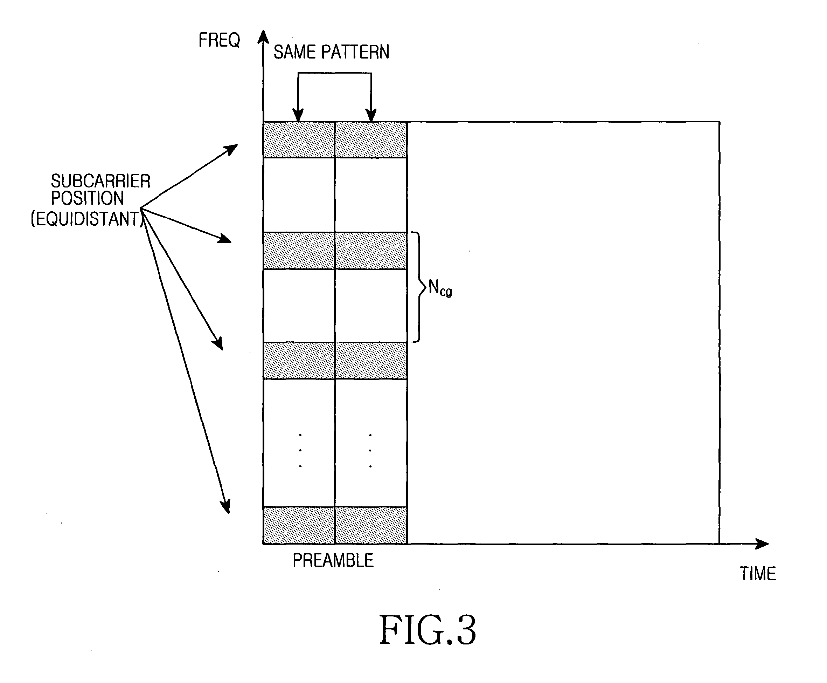

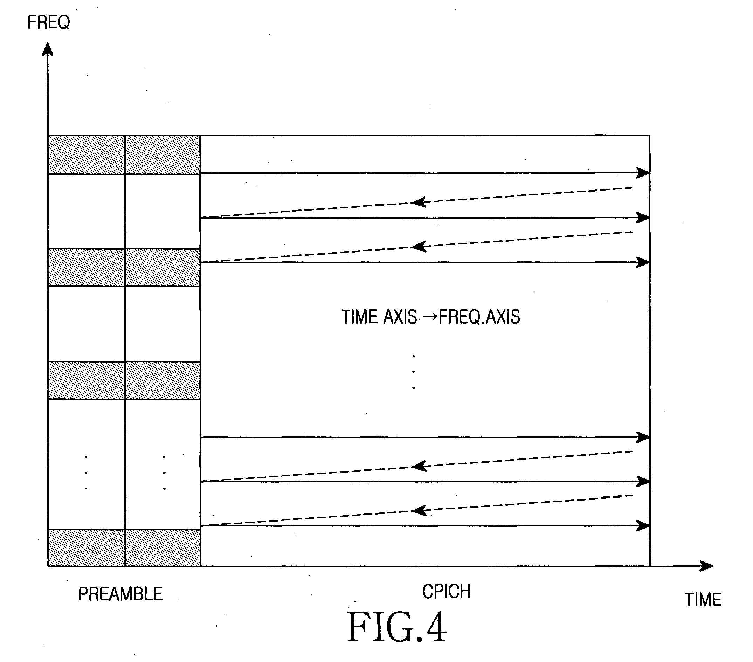

Referring to FIG. 2, an SCH is time-multiplexed and a CPICH is code-multiplexed with TCHs, for transmission. The SCH and the CPICH have the formats illustrated in FIGs. 3 and 4, respectively.

Referring to FIG 3, modulation symbols having predetermined values are mapped equidistantly along a frequency axis. The spacing between modulation symbols corresponds the number of code groups (or BS groups) $N_{cg}$. A subcarrier to which the first modulation symbol is mapped is determined by a group identifier. For a first group, for example, the first modulation symbol is mapped to a first subcarrier. For a second group, the first modulation symbol is mapped to a second subcarrier and for a third group, the first modulation symbol to a third subcarrier. The SCH is constructed by repeating this pattern, that is, using two successive same OFDM symbols. Receiving this SCH, a receiver (e.g., an MS) identifies a BS group by detecting the positions of subcarriers with modulation symbols mapped and acquires frame timing by non-coherent detection using the two successive same OFDM symbols.

Referring to FIG 4, the CPICH is code-multiplexed in a given total frequency band during a predetermined number of symbol periods (or TCH periods). In the system, one scrambling code is used and the CPICH is scrambled with the scrambling code along a time axis first and then a frequency axis. Given $N_c$ subcarriers in total and $N_{fs}$ symbols, the length of the scrambling code is $N_c \times N_{fs}$. The scrambling code can be a PN sequence. In this case, the characteristics of the PN sequence are still maintained along the frequency axis due to the property of m-sequence decimation. The receiver identifies a BS by detecting the phase offset of the scrambling code used for the CPICH. With the sequential scrambling of the CPICH on a time axis-by-time axis basis, frequency selective fading-caused performance degradation is avoided.

The 3-step cell search of the present invention includes the three following steps.

1st step: OFDM symbol timing acquisition and fractional part frequency offset estimation using CP;

2nd step: frame synchronization, BS group (or code group) identification, and integer part frequency offset estimation using the SCH with two successive same symbols; and

3rd step: BS identification by estimating the phase offset of the scrambling code (PN sequence) used for the CPICH.

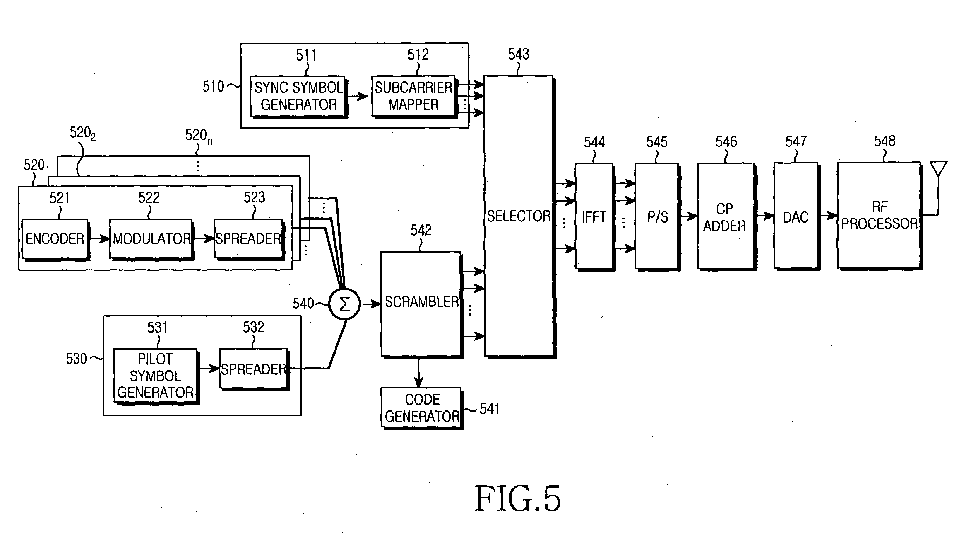

FIG. 5 is a block diagram illustrating a transmitter in the OFCDMA communication system according to the present invention. Referring to FIG 5, the transmitter includes an SCH generator 510, TCH generators $520_1 \sim 520_n$, a CPICH generator 530, an adder 540, a code generator 541, a scrambler 542, a selector 543, an IFFT processor 544, a Parallel-to-Serial (P/S) converter 545, a CP adder 546, a Digital-to-Analog Converter (DAC) 547, and a Radio Frequency (RF) processor 548. The SCH generator 510 has a sync symbol generator 511 and a subcarrier mapper 512. The CPICH generator 530 has a pilot symbol generator 531 and a spreader 532. The TCH generator 520 has an encoder 521, a modulator 522, and a spreader 523.

The sync symbol generator 511 generates a predetermined number of modulation symbols as sync symbols for transmission on the SCH every frame period. As illustrated in FIG. 3, the SCH is transmitted such that it corresponds with the preamble of a frame. The subcarrier mapper 512 maps the sync symbols to subcarriers within a code group to which the transmitter belongs.

The encoder 521 encodes an input information bit stream at a predetermined coding rate. The encoder 521 can include a convolutional encoder, a turbo encoder, or a Low Density Parity Check (LDPC) encoder.

The modulator 522 maps the code symbols received from the encoder 521 to signal points in a predetermined modulation scheme (or modulation order) and outputs complex symbols. The modulation scheme can be Binary Phase Shift Keying (BPSK), Quadrature Phase Shift Keying (QPSK), (8PSK), 16ary Quadrature Amplitude Modulation (16QAM), or 64QAM. One bit (s=1) is mapped to one signal point (complex signal) in BPSK, two bits (s=2) to one complex signal in QPSK, three bits (s=3) to one complex signal in 8PSK, four bits (s=4) to one complex signal in 16QAM, and six bits (s=6) to one complex signal in 64QAM. Here, s stands the number of bits.

The spreader 523 spreads the modulation symbols received from the modulator 522 with a spreading code (e.g., a Walsh code) assigned to a receiver (or a user).

The pilot symbol generator 531 generates pilot symbols to be transmitted on the CPICH. The spreader 531 spreads the pilot symbols with a predetermined spreading code.

The adder 540 adds TCH signals received from a plurality of TCH generators to the pilot channel signal received from the pilot channel generator 530 at a chip level.

The code generator 541 generates a scrambling code (cell identification code). As described earlier, the scrambling code is a PN sequence and each BS is identified by a phase offset of the PN sequence.

The scrambler 542 scrambles the sum signal with the scrambling code. The scrambling proceeds along the time axis first and then the frequency axis, as illustrated in FIG. 4. Despite the scrambling from the time axis first to the frequency axis, the characteristics of the PN sequence are still effective along the frequency axis. In real implementation, therefore, the scrambler 542 scrambles the parallel data (frequency-domain data) output from the adder 540 with a known frequency-domain PN code.

The selector 543 selects the signal from the SCH generator 510 during a preamble period and the scrambled signal from the scrambler 542 during a TCH period under the control of an upper layer controller (not shown).

The IFFT processor 544 IFFT-processes the frequency-domain signal from the selector 543 and outputs time-domain sample data. The P/S converter 545 serializes the sample data. The CP adder 546 inserts a CP into the serial sample data.

The DAC 547 converts the CP-having sample data into an analog signal. The RF processor 548, having a filter and a front-end unit, processes the analog signal to an RF signal for actual transmission and transmits the RF signal on a radio channel through a transmit antenna.

In this way, the SCH is time-multiplexed, the CPICH is code-multiplexed, and scrambling takes place on a time axis-by-time axis basis according to the present invention.

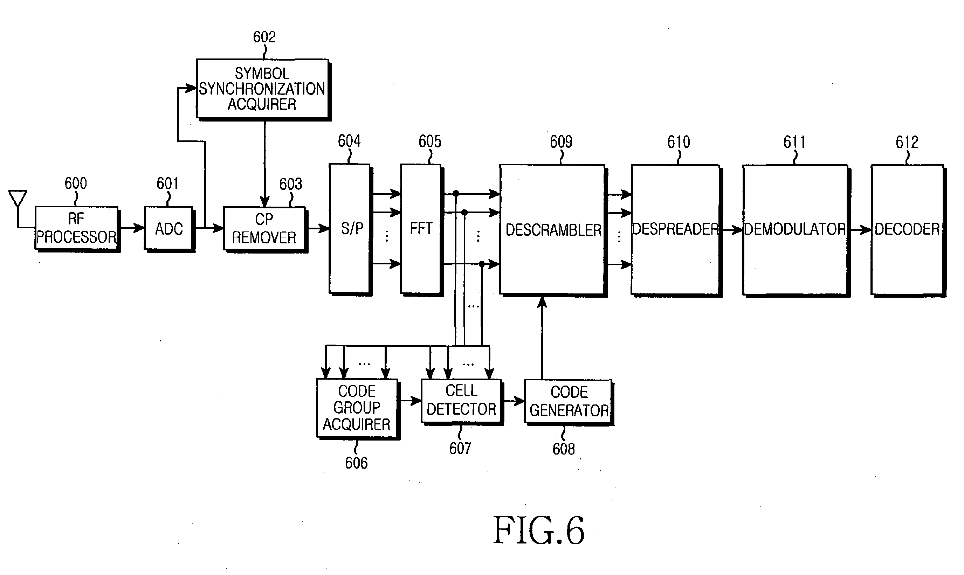

FIG. 6 is a block diagram illustrating a receiver in the OFCDMA communication system according to the present invention. Referring to FIG 6, the receiver includes an RF processor 600, an Analog-to-Digital Converter (ADC) 601, a symbol synchronization acquirer 602, a CP remover 603, a Serial-to-Parallel (S/P) converter 604, an FFT processor 605, a code group acquirer 606, a cell detector 607, a code generator 608, a descrambler 609, a despreader 610, a demodulator 611, and a decoder 612.

The RF processor 600, having a front-end unit and a filter, downconverts an RF signal received on a radio channel to a baseband signal. The ADC 601 converts the analog baseband signal to a digital signal.

The symbol synchronization acquirer 602 correlates samples of a CP length with other samples of the CP length spaced from the samples by an FFT size in the sample data received from the ADC 601, detects a correlation peak by iterating the correlation, and acquires OFDM symbol synchronization and fine frequency synchronization. A predetermined number of ($N_1$) symbol periods are searched because the correlation reliability of one OFDM symbol period is low. The operation of the symbol synchronization acquirer 602 is modeled on Equation (1):

$$\hat{\theta}_s = \arg \max_{\tilde{\theta}_s} \left| \Lambda_1\left(\tilde{\theta}_s\right) \right|$$

$$\Lambda_1\left(\tilde{\theta}_s\right) = \sum_{i=0}^{N_1-1} \sum_{k=0}^{N_{cp}-1} r^*\left(\tilde{\theta}_s + k + i \cdot N_s\right) r\left(\tilde{\theta}_s + k + N_{fft} + i \cdot N_s\right)$$

$$\hat{\varepsilon}_f = \frac{1}{2\pi} \arg\left\{\Lambda_1\left(\tilde{\theta}_s\right)\right\}$$

. . . . .Equation (1)

where, A denotes a correlation value of cyclic prefix length(subscript 1 is an index for symbol synchronization), $\theta_s$ denotes symbol timing (FFT timing), r denotes a received signal, * denotes complex conjugate, small k denotes an index for counting cyclic prefix length, $N_s$ denotes the number of samples per symbol (=$N_{fft}$ + $N_{cp}$, $N_{fft}$ denotes the FFT size, $N_{cp}$ denotes the CP length) and $\varepsilon_f$ denotes a fractional frequency offset.

The CP remover 603 removes a CP from the sample data received from the ADC 601 based on the acquired symbol synchronization. The S/P converter 604 parallelizes the CP-removed data. The FFT processor 605 FFT-processes the parallel data to frequency-domain data.

For each code group, the code group acquirer 606 extracts subcarrier values at predetermined positions from the FFT data, correlates subcarrier pairs at the same positions in two successive OFDM symbols, and sums the correlations. The code group acquirer 606 then detects a code group corresponding to subcarrier positions offering a maximum value among the correlations and acquires frame synchronization using the timing at which the maximum value is detected. The operation of code group acquirer 606 is modeled on Equation (2):

$$\left(\hat{K}, \hat{\theta}_f\right) = \arg \max_{\left(\tilde{K}, \tilde{\theta}_f\right)} \left| \Lambda_2\left(\tilde{K}, \tilde{\theta}_f\right) \right|$$

$$\Lambda_2\left(\tilde{K}, \tilde{\theta}_f\right) = \frac{1}{\Phi_{\tilde{\theta}_f}} \sum_{k=0}^{N_2-1} R^*_{\tilde{\theta}_f}\left(\tilde{K} + kN_{cg}\right) \cdot R_{\tilde{\theta}_f+1}\left(\tilde{K} + kN_{cg}\right)$$

$$\Phi_i = \sum_{k=0}^{N_c-1} \left| R_i(k) \right| \cdot \left| R_{i+1}(k) \right|$$

$$\hat{\varepsilon}_i = \arg \max_{\tilde{\varepsilon}_i} \Lambda_3\left(\tilde{\varepsilon}_i\right), \quad \text{estimation range} : -\frac{1}{2} \cdot \frac{N_{fft}}{N_{cp}} \leq \hat{\varepsilon}_i < \frac{1}{2} \cdot \frac{N_{fft}}{N_{cp}}$$

$$\Lambda_3\left(\tilde{\varepsilon}_i\right) = \text{Re}\left\{\Lambda_2\left(\hat{K}, \hat{\theta}_f\right) \cdot \Phi_{\hat{\theta}_f} \cdot e^{-j2\pi\tilde{\varepsilon}_i N_{cp}/N_{fft}}\right\}$$

$$\text{final code group} = \text{previous estimated code group} + \hat{\varepsilon}_i$$

. . . . .Equation (2)

where large K denotes a code group, $\theta_f$ denotes frame timing synchronization, A denotes a metric for code group detection and frame timing synchronization (subscript 2 is an index for frame synchronization, subscript 3 is an index for integer frequency synchronization), R;(k) denotes a $k^{th}$ subcarrier value in an $i^{th}$ OFDM symbol, * denotes complex conjugate, $N_{cg}$ denotes the number of code groups ($N_2 = N_c / N_{cg}$, here $N_2$ denotes the number of subcarriers used for identifying code groups, $N_c$ denotes the total number of subcarriers used), $\Phi$ denotes frequency-domain total signal power, $\varepsilon_i$ denotes an integer frequency offset, $N_{fft}$ denotes the FFT size and $N_{cp}$ denotes the CP length.

As noted from Equation (2), as a correlation is normalized to frequency-domain total signal power $\Phi_i$, the performance of the 2nd step is increased. After acquisition of the frame synchronization and detection of the code group, the integer frequency offset is estimated and the code group is finally corrected correspondingly. The acquired frame synchronization and code group information is provided to the cell detector 607.

The cell detector 607 buffers the FFT data, detects frame timing in the buffered data based on the frame synchronization and code group information, reads subcarrier values from the frame timing on a time axis-by-time axis basis, and detects a frequency offset by descrambling the subcarrier values with the PN code of the code group. The cell detector 607 then determines a BS IDentifier (ID) (or a cell identification code) based on the frequency offset. BS ID may be determined using phase offset, but preferably, BS ID is determined based on the frequency offset The operation of the cell detector 607 is modeled on Equation (3):

$$\hat{\Psi} = \arg \max_{\widetilde{\Psi}} \Lambda_4\left(\widetilde{\Psi}\right)$$

$$\Lambda_4\left(\widetilde{\Psi}\right) = \sum_{l=0}^{L-1} \left| \sum_{q=N_3 l}^{N_3(l+1)-1} \sum_{p=0}^{N_{fs}-1} R_{p+\hat{\theta}_f+2}(q) \cdot p_p^{c*}(q) \cdot w^{p^c}(k) \cdot c^*\left(\left(p + \left(q + \widetilde{\Psi}\right)N_{fs}\right)\bmod\left(N_{fs}N_c\right)\right) \right|$$

$$\frac{N_{BS}}{N_{cg}}\hat{K} \le \widetilde{\Psi} < \frac{N_{BS}}{N_{cg}}\left(\hat{K}+1\right)$$

$$. . . . .\text{Equation (3)}$$

where $\psi$ denotes the BS ID, A denotes a metric for BS ID detection (subscript 4 is an index for base station identifying), c denotes the scrambling code (e.g. a PN sequence) for cell identification, $N_{fs}$ denotes the number of symbols except the preamble (SCH) in one frame, $N_3$ denotes the number of subcarriers for partial averaging to combat the deterioration of a frequency selective fading channel, $L=N_c/N_3$, $N_{BS}$ denotes the total number of BSs to be distinguished, $p_p^{c*}(q)$

denotes a pilot symbol value on a $q$th subcarrier of a $p$th symbol, and $w^{p^c}$ denotes a channel code (e.g., Walsh code -1 or 1) multiplied by the pilot channel. Here, BS is to be identified in one code group.

The code generator 608 generates a scrambling code corresponding to the BS ID detected by the cell detector 607. The descrambler 609 descrambles the FFT data with the scrambling code.

The despreader 610 despreads the descrambled data with a spreading code (e.g., Walsh code) already assigned by the BS.

The demodulator 611 demodulates the despread symbols in correspondence with the modulation scheme used in the transmitter. The decoder 612 decodes the coded data received from the demodulator 611 in correspondence with the coding method used in the transmitter, thereby recovering the original information data.

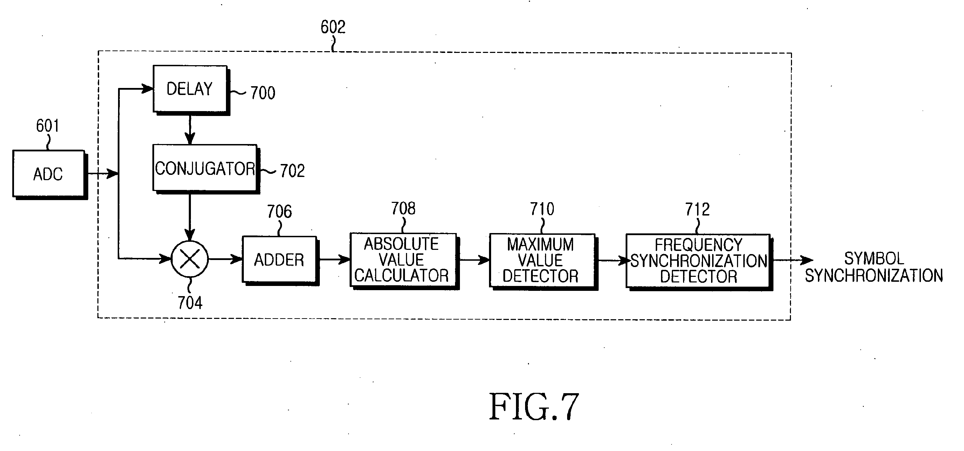

FIG 7 is a detailed block diagram illustrating the symbol synchronization acquirer 602 according to the present invention. Referring to FIG 7, the symbol synchronization acquirer 602 includes a delay 700, a conjugate generator 702, a multiplier 704, an adder 706, an absolute value calculator 708, a maximum value detector 710, and a frequency synchronization detector 712.

The delay 700 delays samples received from the ADC 601 by the FFT size, $N_{fft}$. The conjugator 702 computes the complex conjugates of the delayed samples. The multiplier 704 multiplies the samples received from the ADC 601 by the complex conjugates.

The adder 706 sums the products received from the multiplier 704 every CP length and outputs the sums as correlations. The absolute value calculator 708 accumulates the correlations received from the adder 706 for $N_1$ symbol periods and calculates the absolute values of the accumulated correlations. The maximum value detector 710 detects the maximum (or peak) of the absolute values and determines a sample position with the maximum value as OFDM symbol timing. The frequency synchronization acquirer 712 detects a fractional frequency offset $\varepsilon_j$ by dividing the phase angle of a correlation corresponding to the maximum value by $2\pi$ according to Equation (1).

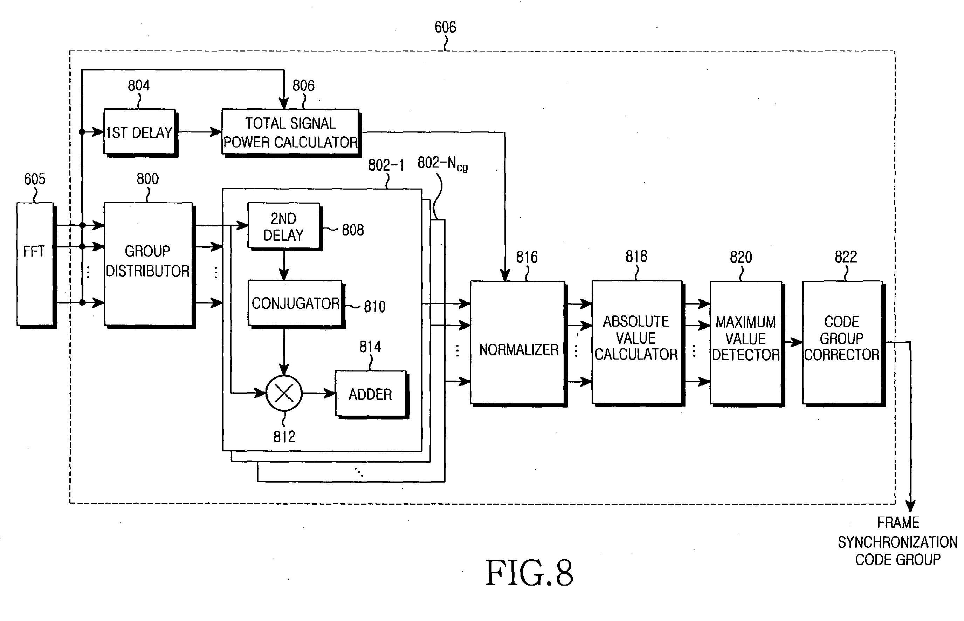

FIG 8 is a detailed block diagram illustrating the frame synchronization/code group acquirer 606 according to the present invention. Referring to FIG 8, the frame synchronization/code group acquirer 606 includes a group distributor 800, group correlators 802-1 to 802-$N_{cg}$, a first delay 804, a total signal power calculator 806, a second delay 808, a conjugator 810, a multiplier 812, an adder 814, a normalizer 816, an absolute value calculator 818, a maximum value detector 820, and a code group corrector 822.

The group distributor 800 extracts subcarrier values for each code group from the FFT data received from the FFT processor 605 and outputs the subcarrier values to a corresponding group correlator. Given 16 code groups, subcarrier values for a first code group (e.g. 0th, 16th, 32th ... subcarrier values) are provided to a first group correlator 802-1 and subcarrier values for a second code group (e.g. 1st, 17th, 33th ... subcarrier values) are provided to a second group correlator 802-2.

The first delay 804 delays the FFT data by one OFDM symbol. The total signal power calculator 806 multiplies ith OFDM symbol data from the IFFT processor 605 by (i+1)th OFDM symbol data from the FFT processor 605 and sums the products, thereby producing a total signal power value.

The group correlators 802-1 to 802-$N_{cg}$ operate in the same manner and thus, for the sake of clarity, only the first group correlator 802-1 will be described by way of example.

The second delay 808 in the first group correlator 802-1 delays subcarrier values received from the group distributor 800 by one OFDM symbol. The conjugator 810 computes the complex conjugates of the delayed subcarrier values. The multiplier 812 multiplies the subcarrier values received from the group distributor 800 by the complex conjugates. The adder 814 sums the products received from the multiplier 812 and outputs the resulting correlation.

The normalizer 816 divides the correlations received from the group correlators 802-1 to 802-$N_{cg}$ by the total signal power value $\Phi_i$.

The absolute value calculator 818 calculates the absolute values of the normalized values received from the normalizer 816. The maximum value detector 820 detects the maximum (or peak) of the absolute values and determines the timing of the maximum value as frame timing and the number of the group correlator outputting the maximum value as the code group number for the receiver.

The code group corrector 822 detects a frequency offset $\varepsilon_i$ by multiplying the correlation corresponding to the maximum value by an exponential function according to Equation 2, and corrects the code group by adding the frequency offset to the determined code group number.

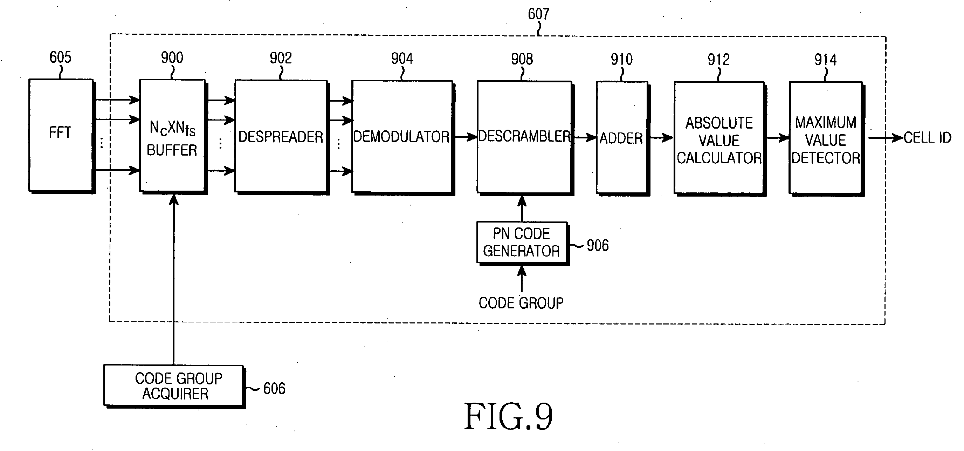

FIG 9 is a detailed block diagram illustrating the cell detector 607 according to the present invention. Referring to FIG. 9, the cell detector 607 includes a buffer 900, a despreader 902, a demodulator 904, a PN code generator 906, a descrambler 908, an adder 910, an absolute value calculator 912, and a maximum value detector 914.

The buffer 900 buffers the subcarrier values received from the FFT processor 605 in a memory of size $N_c \times N_{fs}$, detects frame timing in the buffered data according to the frame synchronization information received from the code group acquirer 606, and reads subcarrier values from the frame timing on a frequency axis-by-frequency axis basis.

The despreader 902 despreads the read subcarriers with a predetermined spreading code (e.g., Walsh code). The demodulator 904 demodulates the despread data and outputs pilot data with scrambling components only.

The PN code generator 906 generates PN codes with different offsets for the BSs in the code group indicated by the code group acquirer 606. The descrambler 908 arranges the pilot data on a time axis-by-time axis basis and descrambles the arranged pilot data with the PN codes.

The adder 910 sums the descrambled data for the respective PN codes (PN phase offsets). The absolute value calculator 912 calculates the absolute values of the sums. The maximum value detector 914 detects the maximum (or peak) of the absolute values and determines a cell ID (BS ID) using a frequency-domain PN phase offset $\psi$ with the maximum value. As described before, because the scrambling, code applied to a predetermined time-frequency area maintains the features of a PN code in both time and frequency, the cell ID is detected using the frequency-domain phase offset (subcarrier number) offering the maximum value.

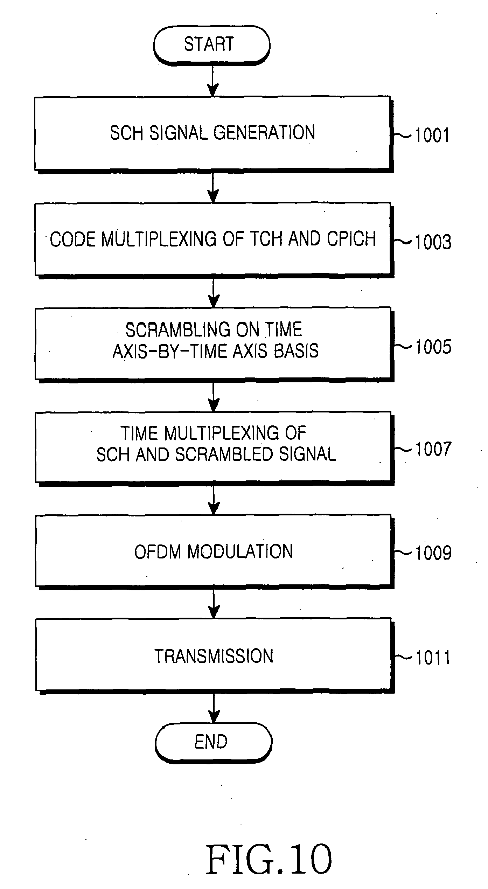

FIG 10 is a flowchart illustrating a transmission operation in a BS in the OFCDMA communication system according to the present invention. Referring to FIG 10, the BS generates an SCH signal by mapping SCH symbols (modulation symbols) to be transmitted during a preamble period to subcarriers determined by the code group of the BS in step 1001. As stated before, the first subcarrier to which the first SCH symbol is mapped is determined by the code group and the SCH symbols are mapped equidistantly along the frequency axis. This pattern occurs twice in the SCH signal. Therefore, the SCH signal is transmitted during two OFDM symbol periods.

Meanwhile, the BS code-multiplexes TCH signals with a CPICH signal by spreading the traffic data and the pilot data with different spreading codes and adds them at a chip level in step 1003.

In step 1005, the BS scrambles the code-multiplexed signal with a scrambling code on a time axis-by-time axis basis, as illustrated in FIG 4.

The BS then time-multiplexes the SCH signal with the scrambled signal in step 1007. Specifically, the SCH signal is mapped to a predetermined starting portion of a frame, followed by mapping of the scrambled signal. The BS OFDM-modulates the time-multiplexed signals by IFFT in step 1009 and RF-processes the OFDM-modulated signal prior to transmission in step 1011.

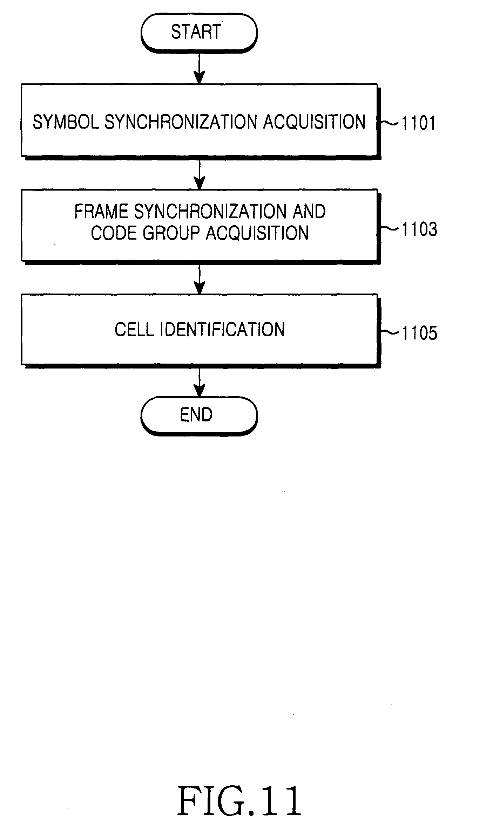

FIG. 11 is a flowchart illustrating a cell search operation in an MS in the OFCDMA communication system according to the present invention. Referring to FIG 11, the MS acquires OFDM symbol synchronization in received sample data using a CP in step 1101. As described earlier, samples spaced by an IFFT size are correlated in a sliding window manner, a peak is detected, and the position of a sample with the peak is determined to be OFDM symbol timing.

In step 1103, the MS acquires frame synchronization and detects a code group using subcarrier positions to which SCH symbols are mapped. Since the same symbols occur twice on the SCH in the present invention, the frame synchronization is acquired using the SCH symbols and the code group is determined by correlating subcarriers at the same positions and detecting a subcarrier position with a peak.

After acquisition of the frame synchronization and the code group, the MS acquires a scrambling code by descrambling a CPICH signal along the time axis first and then the frequency axis and identifies a BS with the scrambling code in step 1105.

Performance comparisons between a conventional MC-CDMA proposed by NTT-DoCoMo and the system of the present invention will now be described below.

First simulation conditions obtained for a system according to the present invention are listed below in Table 1.

Table 1

| Parameter | Value |
|---|---|
| Central frequency | 2GHz |
| Number of subcarriers, $N_c$ | 864 |
| FFT/IFFT size | 1024 (GI: 128) |
| Frame length (symbols) | 40+2 |
| Spreading factor | 16 |
| Number of BSs | 512 (16 groups) |
| Scrambling code | PN sequence (IS-95 short PN) |
| Number ofTCHs | 12 (loading: 0.75) |
| Channel model (small scale) | Rec.ITU-R M. 1225 |

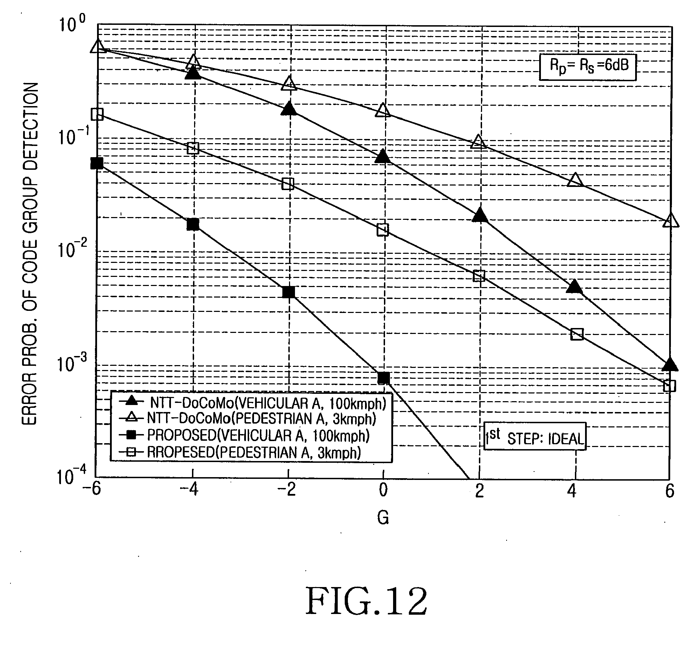

With regard to the performance of the 2nd cell search step, referring to FIG. 12, a horizontal axis represents G (total TCH power in desired cell/other cell interference power) and a vertical axis represents error probability of code group detection. $R_p$ (pilot channel power/one code channel (TCH) power) and $R_s$ (SCH channel power/one code channel (TCH) power) are 6dB. As noted from the graph, the code detection using subcarrier positions according to the present invention provides better performance than the conventional code correlation of NTT-DoCoMo.

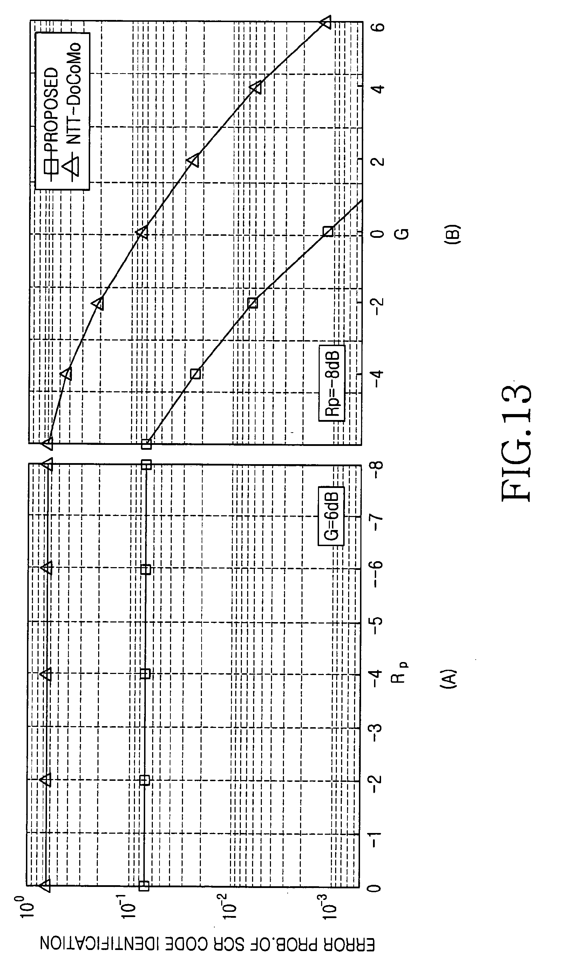

With regard to the performance of the 3rd cell search step, referring to FIG. 13, in graph (A), a horizontal axis represents $R_p$ (pilot channel power/one code channel (TCH) power) and a vertical axis represents error probability of scrambling code group identification. In graph (B), a horizontal axis represents G (total TCH power in desired cell/other cell interference power) and a vertical axis represents error probability of scrambling code group identification. As noted, the scrambling along the time axis first according to the present invention outperforms the conventional frequency-axis scrambling.

As described above, the present invention enables an efficient, accurate cell search by increasing the performance of code group detection and scrambling code detection in a broadband wireless communication system. Since one PN sequence is used as a scrambling code (i.e., cell identification code), the computation volume required for cell search is minimized and hardware implementation is simplified. Furthermore, cell search is performed taking into account frequency offset estimation and thus a frequency offset can be adjusted during the cell search.

While the invention has been shown and described with reference to certain preferred embodiments thereof, it will be understood by those skilled in the art that various changes in form and details may be made therein without departing from the spirit and scope of the invention as defined by the appended claims.

**Claims**

**1.** A transmitting apparatus in a wireless communication system, comprising:

a synchronization channel (SCH) generator for generating an SCH signal by mapping predetermined symbols to predetermined subcarriers according to a code group to which the transmitting apparatus belongs;
a traffic channel (TCH) generator for generating a TCH signal;
a selector for selecting the SCH signal during a preamble period and selecting the TCH signal during a TCH period; and
a transmitter for orthogonal frequency division multiplexing (OFDM)-modulating a signal received from the selector and transmitting the OFDM-modulated signal to a receiving apparatus.

2. The transmitting apparatus of claim 1, wherein the TCH generator comprises:

an encoder for encoding transmission data;
a modulator for modulating coded data received from the encoder; and
a spreader for spreading modulated data received from the modulator with a channelization code.

3. The transmitting apparatus of claim 1, wherein the SCH includes two successive first and second same OFDM symbols.

4. The transmitting apparatus of claim 3, wherein the receiving apparatus acquires frame synchronization using the first and second OFDM symbols of the SCH and identifies a code group according to the positions of the subcarriers to which the predetermined symbols are mapped.

5. The transmitting apparatus of claim 1, wherein the predetermined symbols are mapped to the predetermined subcarriers spaced at a predetermined interval determined according to the number of code groups.

6. A transmitting apparatus in a wireless communication system, comprising:

a pilot channel generator for generating a pilot channel signal mapped to a predetermined time-frequency area;
a scrambler for scrambling the pilot channel signal with a predetermined scrambling code identifying the transmitting apparatus along a time axis first; and
a transmitter for orthogonal frequency division multiplexing (OFDM)-modulating the scrambled signal and transmitting the OFDM-modulated signal.

7. The transmitting apparatus of claim 6, wherein the pilot channel generator comprises:

a generator for generating predetermined modulation symbols; and
a spreader for spreading the modulation symbol with a predetermined spreading code.

8. The transmitting apparatus of claim 6, wherein the pilot channel signal is code-multiplexed with a traffic channel signal, for transmission.

9. The transmitting apparatus of claim 6, wherein the scrambling code is a pseudo noise (PN) code.

10. The transmitting apparatus of claim 6, wherein a phase offset of the PN code is used to identify base station .

11. The transmitting apparatus of claim 9, wherein the scrambling code maintains PN code features in time and frequency.

12. A transmitting apparatus in a wireless communication system, comprising:

a synchronization channel (SCH) generator for generating an SCH signal by mapping predetermined symbols to predetermined subcarriers according to a code group to which the transmitting apparatus belongs;
a traffic channel (TCH) generator for generating a TCH signal mapped to a predetermined time-frequency area;
a pilot channel generator for generating a pilot channel signal;
an adder for adding the TCH signal and the pilot channel signal;
a scrambler for scrambling a signal received from the adder with a predetermined scrambling code along a time axis first;
a selector for selecting the SCH signal during a preamble period and selecting the scrambled signal during a TCH period; and
a transmitter for orthogonal frequency division multiplexing (OFDM)-modulating a signal received from the selector and transmitting the OFDM-modulated signal to a receiving apparatus.

**13.** The transmitting apparatus of claim 12, wherein the SCH includes two successive first and second same OFDM symbols.

**14.** The transmitting apparatus of claim 12, wherein the predetermined symbols are mapped to the subcarriers equidistantly spaced at a predetermined interval determined according to the number of code groups.

**15.** The transmitting apparatus of claim 12, wherein the pilot channel signal is code-multiplexed with the TCH signal, for transmission.

**16.** The transmitting apparatus of claim 12, wherein the scrambling code is a pseudo noise (PN) code.

**17.** The transmitting apparatus of claim 16, wherein the scrambling code maintains PN code features in time and frequency.

**18.** A receiving apparatus in a wireless communication system, comprising:

a symbol synchronization acquirer for acquiring orthogonal frequency division multiplexing (OFDM) symbol synchronization using a cyclic prefix (CP);
a code group acquirer for:

acquiring frame synchronization using two successive same OFDM symbols forming a synchronization channel (SCH), after the OFDM symbol synchronization acquisition: and
detecting a code group to which a base station belongs by detecting the positions of subcarriers to which predetermined modulation symbols are mapped on the SCH; and
a cell detector for:

acquiring a scrambling code identifying the base station by descrambling a pilot channel signal mapped to a predetermined time-frequency area with a predetermined scrambling code for base station identification, determined by the detected code group along a time axis first, after the code group detection.

**19.** The receiving apparatus of claim 18, wherein the code group acquirer comprises:

a group distributor for extracting subcarrier values for each code group from a fast Fourier transform (FFT) signal and outputting the subcarrier values to a predetermined group correlator;
a plurality of group correlators for correlating subcarrier values received from the group distributor on a two OFDM symbol basis; and
a decider for detecting a maximum value from correlations received from the group correlators and deciding a number of a group correlator having the maximum value as a number of the code group of the base station.

**20.** The receiving apparatus of claim 19, further comprising a code group corrector for estimating a frequency offset by a correlation corresponding to the maximum value by an exponential function and correcting the code group number using the estimated frequency offset.

**21.** The receiving apparatus of claim 18, wherein the cell detector comprises:

a buffer for buffering subcarrier values after performing a fast Fourier transform (FFT);
a pilot channel recoverer for despreading the buffered subcarrier values with a spreading code used for a pilot channel, demodulating the despread pilot channel signal, and outputting pilot data;
a code generator for generating pseudo noise (PN) codes with different phase offsets for different code groups; and
a decider for descrambling the pilot data in the predetermined time-frequency area with the PN codes received from the code generator, detecting a peak, and identifying the base station using a PN code having the peak.

**22.** A transmitting method for a base station in a wireless communication system, comprising the steps of:

generating a synchronization channel (SCH) signal by mapping predetermined symbols to predetermined subcarriers according to a code group to which the base station belongs;
code-multiplexing a traffic channel (TCH) signal and a pilot channel signal, the TCH signal and pilot channel signal being mapped to a predetermined time-frequency area;
scrambling the code-multiplexed signal with a predetermined scrambling code identifying the base station along a time axis first;
time-multiplexing the SCH signal with the scrambled signal; and
orthogonal frequency division multiplexing (OFDM)-modulating the time-multiplexed signal and transmitting the OFDM-modulated signal to a receiver.

23. The transmitting method of claim 22, wherein the SCH includes two successive first and second same OFDM symbols.

24. The transmitting method of claim 22, wherein the predetermined symbols are mapped to the subcarriers equidistantly spaced at a predetermined interval determined according to the number of code groups.

25. The transmitting method of claim 22, wherein the receiver acquires frame synchronization using the first and second OFDM symbols of the SCH and identifies a code group according to the positions of the subcarriers to which the predetermined symbols are mapped.

26. The transmitting method of claim 22, wherein the scrambling code is a pseudo noise (PN) code.

27. The transmitting method of claim 26, wherein the scrambling code maintains PN code features in time and frequency.

28. A cell search method for a receiver in a wireless communication system, comprising the steps of:

acquiring orthogonal frequency division multiplexing (OFDM) symbol synchronization using a cyclic prefix (CP);
acquiring frame synchronization using two successive first and second same OFDM symbols forming a synchronization channel (SCH), after the OFDM symbol synchronization acquisition, and detecting a code group to which a base station belongs by detecting the positions of subcarriers to which predetermined modulation symbols are mapped on the SCH; and
acquiring a scrambling code identifying the base station by descrambling a pilot channel signal mapped to a predetermined time-frequency area with a predetermined scrambling code for base station identification, determined by the detected code group along a time axis first, after the code group detection.

29. The cell search method of claim 28, wherein the code group detection step comprises the steps of:

extracting subcarrier values for each code group from a fast Fourier transform (FFT) signal;
correlating the extracted subcarrier values on a two OFDM symbol basis, for each of the code groups; and
detecting a maximum value from correlations received from the group correlators; and
deciding the number of a group correlator having the maximum value as the number of the code group of the base station.

30. The cell search method of claim 28, wherein the scrambling code acquisition step comprises the steps of:

recovering pilot data by despreading subcarrier values after performing an FFT with a spreading code used for a pilot channel and demodulating the despread pilot channel signal;
generating pseudo noise (PN) codes with different phase offsets for different code groups;
descrambling the pilot data in the predetermined time-frequency area with the PN codes received from the code generator and detecting a peak; and
identifying the base station using a PN code having the peak.

FIG.1
(PRIOR ART)

CODE

TRAFFIC CHANNELS

FREQ

PREAMBLE
(TIME-MUX
SCH)

1FRAME

2SYMBOLS

CODE-MUX
CPICH

TIME

FIG.2

FIG.3

FIG.4

EP 1 755 299 A2

FIG.5

EP 1 755 299 A2

EP 1 755 299 A2

FIG.6

EP 1 755 299 A2

602

601

ADC

DELAY ~700

CONJUGATOR ~702

706

×

704

ADDER

708

ABSOLUTE
VALUE
CALCULATOR

710

MAXIMUM
VALUE
DETECTOR

712

FREQUENCY
SYNCHRONIZATION
DETECTOR

SYMBOL
SYNCHRONIZATION

FIG.7

FIG.8

FIG.9

EP 1 755 299 A2

START

SCH SIGNAL GENERATION ~1001

CODE MULTIPLEXING OF TCH AND CPICH ~1003

SCRAMBLING ON TIME
AXIS-BY-TIME AXIS BASIS ~1005

TIME MULTIPLEXING OF
SCH AND SCRAMBLED SIGNAL ~1007

OFDM MODULATION ~1009

TRANSMISSION ~1011

END

FIG.10

START

↓

SYMBOL SYNCHRONIZATION ACQUISITION ~1101

↓

FRAME SYNCHRONIZATION AND
CODE GROUP ACQUISITION ~1103

↓

CELL IDENTIFICATION ~1105

↓

END

# FIG.11

FIG.12

FIG.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200576058